# EUROPEAN PATENT APPLICATION

(11) **EP 4 810 298 A1**
(43) Date of publication of application: **23.09.2026**
(21) Application number: 26157497.4
(22) Date of filing: 10.02.2026
(51) Int. Cl.: B60L 3/00, B60L 53/22, B60L 55/00, B60L 58/13, B60L 50/60

(54) **ON-BOARD CHARGER AND OPERATING METHOD THEREOF**

(30) Priority: 21.03.2025 US 202563775525 P; 24.12.2025 CN 202511969908
(71) Applicant: DELTA ELECTRONICS, INC., Taoyuan City 320023 (TW)
(72) Inventor: TSAI, Yu-Lung, 320023 Taoyuan City (TW); LIU, Chi-I, 320023 Taoyuan City (TW); HSUEH, Cheng-Hao, 320023 Taoyuan City (TW)
(74) Representative: 2K Patent Partnerschaft mbB

(57) **Abstract**

An on-board charger (100) is configured in an electric vehicle (200) equipped with an on-board battery (200A). The on-board charger (100) includes an AC-to-DC conversion circuit (1), an energy storage capacitor (Cbusl), a bidirectional conversion circuit (2), an AC conversion circuit (3), and a controller (4). The AC-to-DC conversion circuit (1) converts a first AC power source (Pac1) into a DC power source (Pdc). The bidirectional conversion circuit (2) bidirectionally converts the DC power source (Pdc) and an energy storage power source (Pb), and charges or discharges the on-board battery (200A) according to the energy storage power source (Pb). The AC conversion circuit (3) selectively provides a second AC power source (Pac2) according to either the first AC power source (Pac1) or the DC power source (Pdc), and the controller (4) continuously controls the AC conversion circuit (3) to provide the second AC power source (Pac2) to a load (400) according to residual power of the on-board charger (100) during a hold-up time after a power interruption of the first AC power source (Pac1).

## Description

### BACKGROUND

### Technical Field

The present disclosure relates to an on-board charger with uninterrupted power supply function and an operating method thereof, and more particularly to an on-board charger and an operating method thereof for enhancing the stability of power supply from a vehicle to a load through the uninterruptible power supply function.

### Description of Related Art

The statements in this section merely provide background information related to the present disclosure and do not necessarily constitute prior art.

With the long-term use of fossil fuels leading to gradual energy shortages, the green energy industry has increasingly attracted public attention. In the transportation sector, the proportion of electric vehicles has been steadily rising in recent years, bringing abundant business opportunities. With the active promotion by major automakers, many innovative technologies have emerged. In the past, the battery energy of electric vehicles was only used for vehicle operation. However, with technological advancements, battery energy is gradually being used to power electrical appliances, the power grid, and even various products that require electricity. However, the question of how to effectively convert electricity has also arisen. For on-board batteries of the electric vehicles (EVs), the on-board charger (OBC) primarily relies on converting the alternating current (AC) power source from the power grid into the direct current (DC) power to efficiently charge the battery. Furthermore, thanks to the bidirectional power transmission capability inherent in its topology, the on-board charger can not only charge but also discharge simultaneously, thus enabling flexible and efficient application of the battery's stored energy.

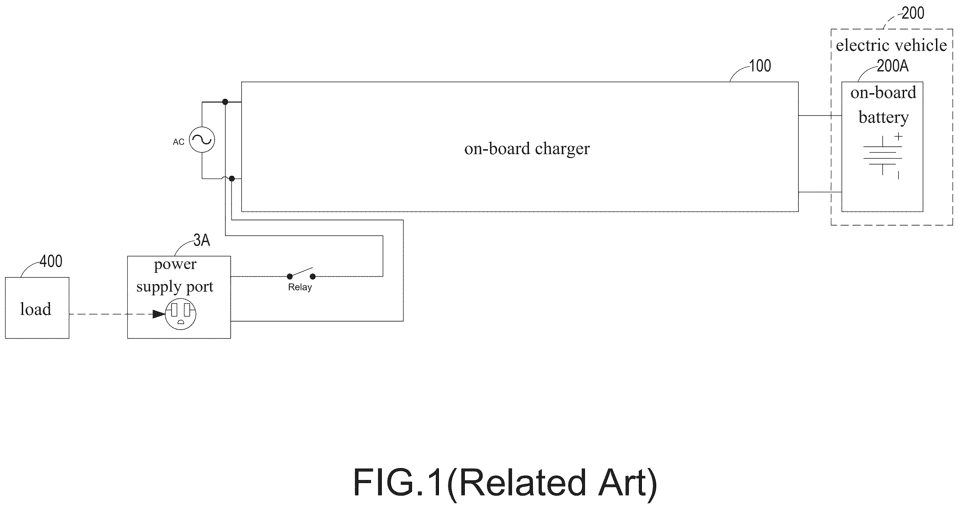

Please refer to FIG. 1, which shows a block circuit diagram of an on-board charger according to the related art. Typically, the on-board charger receives power from an external power source through a charging gun, and after power conversion by an on-board charger 100, charges an on-board battery 200A of an electric vehicle 200. When the on-board battery 200A discharges, the electrical energy is converted by the on-board charger 100 and supplied to a load 400 through a power supply port 3A. However, this structure of the on-board charger 100 cannot simultaneously handle the discharging function during charging operation. Traditional solutions require an external relay to provide a circuit path to obtain external power from the charging gun to directly supply power to the load 400. Therefore, when the external power source is suddenly disconnected (e.g., when the charging gun is unplugged or the mains power is interrupted), the power supply port 3A instantly loses its power supply from the external power source. Although the on-board battery 200A can resume power supply after a period of time to maintain the operation of the power supply port 3A, the response delay during the switching process still causes a sudden voltage drop at the power supply port 3A. Such a sudden voltage drop can lead to a poor user experience, or affect or even damage sensitive electronic devices.

Therefore, how to design a single-stage converter and an operating method thereof so as to continuously supply power to a load during a hold-up time after an external power source is disconnected according to residual power within an on-board charger, thereby preventing a sudden voltage drop in power received by the load, constitutes a major technical issue that the inventors of the present disclosure seek to address.

### SUMMARY

In order to solve the above-mentioned problems, the present disclosure provides an on-board charger configured in an electric vehicle including an on-board battery. The on-board charger includes an AC-to-DC conversion circuit, an energy storage capacitor, a bidirectional conversion circuit, an AC conversion circuit, and a controller. The AC-to-DC conversion circuit is coupled to an external connection port for transmitting a first AC power source, and the AC-to-DC conversion circuit converts the first AC power source into a DC power source. The energy storage capacitor is coupled to the AC-to-DC conversion circuit, and stores the DC power source. The bidirectional conversion circuit is coupled to the AC-to-DC conversion circuit and the on-board battery, and bidirectionally converts the DC power source and an energy storage power source to charge or discharge the on-board battery. The AC conversion circuit is coupled to the AC-to-DC conversion circuit and a power supply port, and the AC conversion circuit selectively provides a second AC power source according to the first AC power source or the DC power source. The controller is coupled to the AC conversion circuit, and continuously controls the AC conversion circuit to provide the second AC power source according to residual power of the on-board charger for a hold-up time after a power interruption of the first AC power source so as to continuously supply power to a load through the power supply port.

In order to solve the above-mentioned problems, the present disclosure provides operating method of an on-board charger. The on-board charger is configured in an electric vehicle including an on-board battery. The on-board charger includes an AC-to-DC conversion circuit, an energy storage capacitor, a bidirectional conversion circuit, and an AC conversion circuit. The AC-to-DC conversion circuit is coupled to an external connection port for transmitting a first AC power source, and the AC-to-DC conversion circuit is coupled to a power supply port for connecting a load. The method includes steps of: (a) operating in a charging mode for charging the on-board battery, the charging mode including steps of: (a1) controlling the AC-to-DC conversion circuit to convert the first AC power source into a DC power source and storing the DC power source in the energy storage capacitor, (a2) controlling the bidirectional conversion circuit to convert the DC power source into an energy storage power source and providing the energy storage power source to charge the on-board battery, and (a3) controlling the AC conversion circuit to selectively provide a second AC power source according to either the first AC power source or the DC power source to supply power to the load, (b) detecting that the first AC power source has been interrupted, and (c) continuously controlling the AC conversion circuit to provide the second AC power source according to residual power of the on-board charger for a hold-up time after the power interruption of the first AC power source so as to continuously supply power to the load through the power supply port.

The purpose and effect of the present disclosure is that the on-board charger can continuously control the AC conversion circuit to provide the second AC power source according to the residual power inside the on-board charger during the hold-up time after the power interruption of the first AC power source so as to continuously supply power to the load through the power supply port, thereby avoiding a sudden voltage drop at the power supply port.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a block circuit diagram of an on-board charger according to the related art.
FIG. 2 is a block circuit diagram of an on-board charger according to the present disclosure.
FIG. 3 is a schematic diagram of a mode transition period according to the present disclosure.
FIG. 4A is a circuit block diagram of the on-board charger according to a first embodiment of the present disclosure.
FIG. 4B is a schematic diagram of a power path of the on-board charger according to the first embodiment of the present disclosure.
FIG. 5A is a circuit block diagram of the on-board charger according to a second embodiment of the present disclosure.
FIG. 5B is a schematic diagram of a power path of the on-board charger according to the second embodiment of the present disclosure.
FIG. 6 is a flowchart of an operating method of the on-board charger according to the present disclosure.
FIG. 7 is a circuit structure diagram of the on-board charger simulated using simulation software according to the first embodiment of the present disclosure.
FIG. 8A is a schematic waveform diagram illustrating a hold-up time of the on-board charger after a power interruption of a first AC power source according to a first embodiment of the present disclosure.
FIG. 8B is an enlarged schematic waveform diagram illustrating the hold-up time of the on-board charger after the power interruption of the first AC power source according to the first embodiment of the present disclosure.
FIG. 9A is a schematic waveform diagram illustrating the on-board charger transitioning from the mode transition period to a discharging mode according to the first embodiment of the present disclosure.
FIG. 9B is a comparative waveform diagram illustrating a comparison between the on-board charger shown in FIG. 1 and FIG. 4A when the first AC power source is abruptly interrupted according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

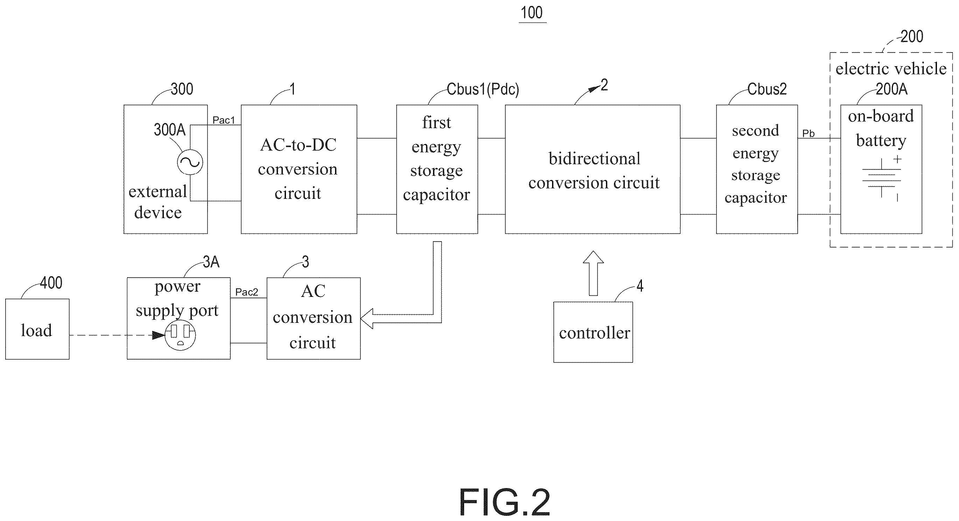

Please refer to FIG. 2, which shows a block circuit diagram of an on-board charger according to the present disclosure, and also refer to FIG. 1. The on-board charger 100 is primarily configured in an electric vehicle 200 equipped with an on-board battery 200A. An external device 300 may be plugged into the on-board charger 100 through an external connection port 300A to charge the on-board battery 200A by the on-board charger 100. The external device 300 may be a charging pile, an on-board charger, or other device used to charge the on-board battery 200A. The external connection port 300A may be a connector such as a charging gun or charging cable, but is not limited to these. Specifically, the on-board charger 100 includes an AC-to-DC conversion circuit 1, a first energy storage capacitor Cbus1, a bidirectional conversion circuit 2, an AC conversion circuit 3, and a controller 4. One terminal of the AC-to-DC conversion circuit 1 is coupled to the external connection port 300A for transmitting a first AC power source Pac1, and the other terminal of the AC-to-DC conversion circuit 1 is coupled to the first energy storage capacitor Cbus1. One terminal of the bidirectional conversion circuit 2 is coupled to the first energy storage capacitor Cbus1, and the other terminal of the bidirectional conversion circuit 2 is coupled to the on-board battery 200A.

One terminal of the AC conversion circuit 3 is coupled to the AC-to-DC conversion circuit 1, and the other terminal of the AC conversion circuit 3 is coupled to a power supply port 3A so as to be coupled to an external load 400 through a power supply port 3A. The power supply port 3A may be a socket or other connection port for plugging in a power supply device (i.e., the load 400), and the load 400 is not limited to, household appliances, portable electronic devices, etc. The controller 4 is coupled to the AC-to-DC conversion circuit 1, the bidirectional conversion circuit 2, and the AC conversion circuit 3, and is used to control the AC-to-DC conversion circuit 1, the bidirectional conversion circuit 2, and the AC conversion circuit 3 to perform power conversion, thereby controlling the on-board charger 100 to charge the on-board battery 200A, and also supplying power to the load 400. In one embodiment, the AC-to-DC conversion circuit 1, the bidirectional conversion circuit 2, and the AC conversion circuit 3 may each include a controller, and the controllers of the three circuits are controlled by a main controller. However, to avoid obscuring the main features of the present disclosure, "controller 4" is used as a general term here, and will not be described in detail further in the present disclosure.

Furthermore, the controller 4 can control the AC-to-DC conversion circuit 1 to convert the first AC power source Pac1 into a DC power source Pdc. The first energy storage capacitor Cbus1 receives and stores the DC power source Pdc. Furthermore, the controller 4 can control the bidirectional conversion circuit 2 to bidirectionally convert the DC power source Pdc and the energy storage power source Pb so as to charge or discharge the on-board battery 200A according to the energy storage power source Pb. In addition, the controller 4 can control the AC conversion circuit 3 to selectively provide a second AC power source Pac2 according to either the first AC power source Pac1 or the DC power source Pdc so as to supply power to the load 400 through the power supply port 3A. The AC conversion circuit 3 selectively provides the second AC power source Pac2 according to either the first AC power source Pac1 or the DC power source Pdc mainly according to its coupling position, which will be explained in more detail later and will not be repeated here. Furthermore, the AC conversion circuit 3 is preferably a step-down conversion circuit, which mainly converts high-voltage power (e.g., but not limited to DC 400 to 800V or AC 220 to 380V) into AC 110V, but is not limited thereto and can be selected according to actual needs. On the other hand, in one embodiment, a second energy storage capacitor Cbus2 may be included between the bidirectional conversion circuit 2 and the on-board battery 200A, and the second energy storage capacitor Cbus2 is mainly used to stabilize the voltage value of the energy storage power source Pb. However, if the bidirectional conversion circuit 2 or the on-board battery 200A already includes a capacitor that can stabilize the energy storage power source Pb, then the second energy storage capacitor Cbus2 may be omitted.

Specifically, when the external device 300 has power and the on-board battery 200A needs charging, the controller 4 can control the bidirectional conversion circuit 2 to convert the DC power source Pdc into the energy storage power source Pb so as to provide the energy storage power source Pb to charge the on-board battery 200A. Furthermore, the controller 4 also selectively provides the second AC power source Pac2 to the power supply port 3A according to either the first AC power source Pac1 or the DC power source Pdc so as to provide the second AC power source Pac2 to the load 400 through the power supply port 3A. Conversely, when the external device 300 has no power and the on-board battery 200A needs to provide the power required for the operation of the load 400, the controller 4 can control the bidirectional conversion circuit 2 to convert the energy storage power source Pb into the DC power source Pdc, and selectively control the AC-to-DC conversion circuit 1 according to the coupling position of the AC conversion circuit 3 so as to selectively provide the second AC power source Pac2 according to either the first AC power source Pac1 or the DC power source Pdc. Therefore, the on-board battery 200A can discharge the on-board charger 100, enabling the controller 4 to control the AC conversion circuit 3 to provide a second AC power source Pac2 to the power supply port 3A so as to provide the second AC power source Pac2 to the load 400 through the power supply port 3A.

One of the objectives and benefits of the present disclosure is to effectively solve the voltage drop problem caused by a power interruption of the first AC power source Pac1 when the controller 4 has not yet controlled the bidirectional conversion circuit 2 to convert the energy storage power source Pb into the DC power source Pdc, or when the first AC power source Pac1 remains continuously in power interruption (as shown in FIG. 1). Specifically, the on-board charger 100 of the present disclosure can, during the hold-up time after the power interruption of the first AC power source Pac1, continuously control the AC conversion circuit 3 to provide the second AC power source Pac2 according to the residual power inside the on-board charger 100 so as to continuously supply power to the load 400 through the power supply port 3A. The hold-up time may be referred to as ride-through time or autonomy/run time, which mainly defines how long the stored energy can independently supply power the load, or the time during which the load maintains its function (does not trip) during a voltage drop/interruption. Furthermore, the residual power inside the on-board charger 100 may, for example but not limited to, be the residual power in the first energy storage capacitor Cbus1 or the power capacitor inside the AC conversion circuit 3 when the various conversion circuits of the on-board charger 100 are not operating (except for the AC conversion circuit 3). The AC conversion circuit 3 utilizes the residual power to perform power conversion to provide the second AC power source Pac2. The details of this will be explained further later and will not be repeated here.

Therefore, the present disclosure, through optimized circuit design, not only effectively maintains the stability of supplying power to the power supply port 3A during the instantaneous power failure of the external device 300, but also reduces the impact of voltage fluctuations in the first AC power source Pac1 on the entire system of the on-board charger 100. Therefore, compared with the conventional solution in FIG. 1, the design of the present disclosure, while meeting the vehicle-to-load (V2L) requirements, further increases the stability and reliability of the on-board charger 100, thereby providing a more economical and efficient solution for energy management of electric vehicles. In one embodiment, unless otherwise specified, the term "power source" in the present disclosure can be a collective term for voltage, current, and power, that is, unless otherwise specified, the term "power source" can represent at least one of voltage, current, or power, which will not be repeated further here.

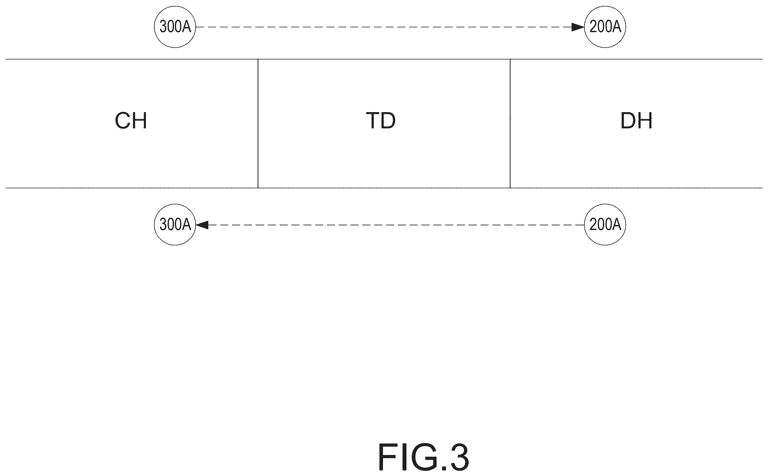

Please refer to FIG. 3, which shows a schematic diagram of a mode transition period according to the present disclosure, and also refer to FIG. 2. Under certain specific charging specifications for electric vehicles, the on-board charger 100 needs to stop its power conversion operation when the operating mode changes to avoid malfunctions of the on-board charger 100. Specifically, depending on the type of on-board charger 100, the controller 4 may include various operating modes, such as, but not limited to, charging mode CH, discharging mode DH (or vehicle-to-load (V2L) mode), and standby mode. In the present disclosure, the controller 4 may include the charging mode in which the on-board charger 100 charges the on-board battery 200A, and the discharging mode in which the on-board battery 200A discharges the on-board charger 100. Furthermore, during the mode transition period TD between the charging mode and the discharging mode, the controller 4 assumes that the power conversion operation of the on-board charger 100 needs to be stopped due to certain specific charging specifications for electric vehicles.

Therefore, when the controller 4 intends to switch the on-board charger 100 from the charging mode CH to the discharging mode DH (regardless of whether the power interruption of the first AC power source Pac1 due to an abnormal condition or is actively controlled by the controller 4), a short mode transition period TD is included between the mode switching operations. Similarly, switching from the discharging mode DH to the charging mode CH follows the same principle and is not described again for brevity. Furthermore, the controller 4 needs to disable the AC-to-DC conversion circuit 1 and the bidirectional conversion circuit 2 during the mode transition period TD to prevent malfunctions of the on-board charger 100. Therefore, during the mode transition period TD, neither the AC-to-DC conversion circuit 1 nor the bidirectional conversion circuit 2 performs power conversion; only the AC conversion circuit 3 continuously performs power conversion according to the residual power in the on-board charger 100. Therefore, in order to effectively maintain the stability of the power supply to the power supply port 3A at the moment of power failure of the external device 300, the hold-up time can preferably be designed to be greater than or equal to the mode transition period TD so that the AC conversion circuit 3 can maintain the second AC power source Pac2 above a predetermined threshold during the mode transition period TD, which can be designed, for example, but not limited to, based on a low voltage protection point of the load 400.

Furthermore, if the external device 300 loses power and the on-board battery 200A also happens to be depleted, the entire on-board charger 100 will fail due to lack of power. In this situation, the controller 4 will continuously disable the AC-to-DC conversion circuit 1 and the bidirectional conversion circuit 2. The controller 4 will also continuously control the AC conversion circuit 3 to provide the second AC power source Pac2 according to the residual power of the on-board charger 100, until the residual power of the on-board charger 100 is exhausted, thus continuously supplying power to the load 400 through the power supply port 3A during the hold-up time. This ensures that the load 400 has sufficient response time during this time (i.e., the hold-up time), preventing data corruption or abnormal shutdown. On the other hand, when the power supply port 3A is not coupled to the load 400 or the on-board charger 100 is operating in the standby mode, the controller 4 can disable the AC conversion circuit 3 to prevent the second AC power source Pac2 from being supplied to the power supply port 3A.

Please refer to FIG. 2 and FIG. 3, the on-board charger 100 may also selectively include a vehicle-to-grid (V2G) functionality. When the on-board charger 100 includes V2G functionality, the AC-to-DC conversion circuit 1 may be a bidirectional conversion circuit. Therefore, when the on-board charger 100 includes V2G functionality and the controller 4 operates in the discharging mode DH, the controller 4 may selectively control the AC-to-DC conversion circuit 1 to convert the DC power source Pdc into the first AC power source Pac1 according to the needs of the external device 300, thus selectively providing the first AC power source Pac1 according to the needs of the external device 300. Alternatively, when the AC conversion circuit 3 provides the second AC power source Pac2 according to the first AC power source Pac1, the AC-to-DC conversion circuit 1 must be a bidirectional conversion circuit so that in the discharging mode DH, the AC conversion circuit 3 can continuously convert the first AC power source Pac1. Therefore, the on-board charger 100 can provide multi-mode operation applications according to the user's needs.

Conversely, when the AC conversion circuit 3 provides the second AC power source Pac2 according to the DC power source Pdc, or when the on-board charger 100 does not include vehicle-to-grid (V2G) functionality, the AC-to-DC conversion circuit 1 may be a unidirectional conversion circuit. Therefore, the AC-to-DC conversion circuit 1 does not operate except in the charging mode CH. Since the AC-to-DC conversion circuit 1 does not operate except in the charging mode CH, the controller 4 can continuously disable the AC-to-DC conversion circuit 1 after the power interruption of the first AC power source Pac1, thereby saving power consumption of the on-board charger 100 and the on-board battery 200A and increasing the endurance of the on-board battery 200A and the efficiency of the on-board charger 100. Furthermore, since the circuit structure and control method of the unidirectional conversion circuit are simpler, it can achieve the effect of saving circuit cost and circuit size.

On the other hand, the AC-to-DC conversion circuit 1 may also be a power factor correction (PFC) circuit. The PFC circuit primarily corrects the power factor of the first AC power source Pac1 to increase the energy efficiency of the on-board charger 100 and reduce losses. Furthermore, since the rate of residual power consumption of the on-board charger 100 is related to the loading amount of the load 400, in order to prevent excessive loading amount of the load 400 during the mode transition period TD, which could cause the second AC power source Pac2 to fail to maintain above a predetermined threshold, the controller 4 can control the AC conversion circuit 3 to provide a load reduction signal to the power supply port 3A, thereby notifying the load 400 that the on-board charger 100 intends to perform a load reduction operation. Furthermore, the controller 4 simultaneously limits the output power provided by the AC conversion circuit 3 to the load 400 to reduce the rate of residual power consumption, thereby ensuring that the second AC power source Pac2 maintains above the predetermined threshold during the mode transition period TD. The controller 4 may have a power delivery (PD) function and notify the load 400 of its intention to perform a load reduction operation through handshake communication. Alternatively, the controller 4 may provide a specific signal to the load 400, causing the load 400 to receive this signal and perform the corresponding load reduction operation.

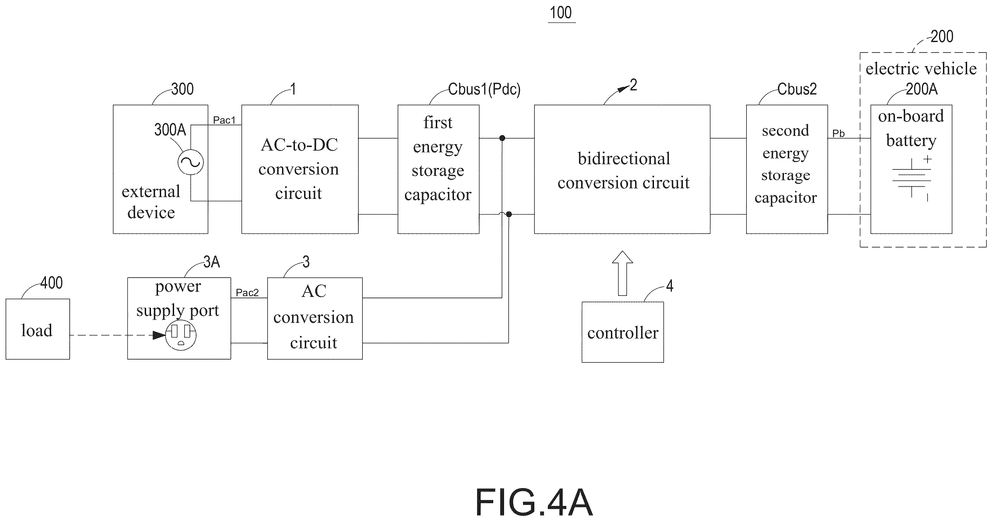

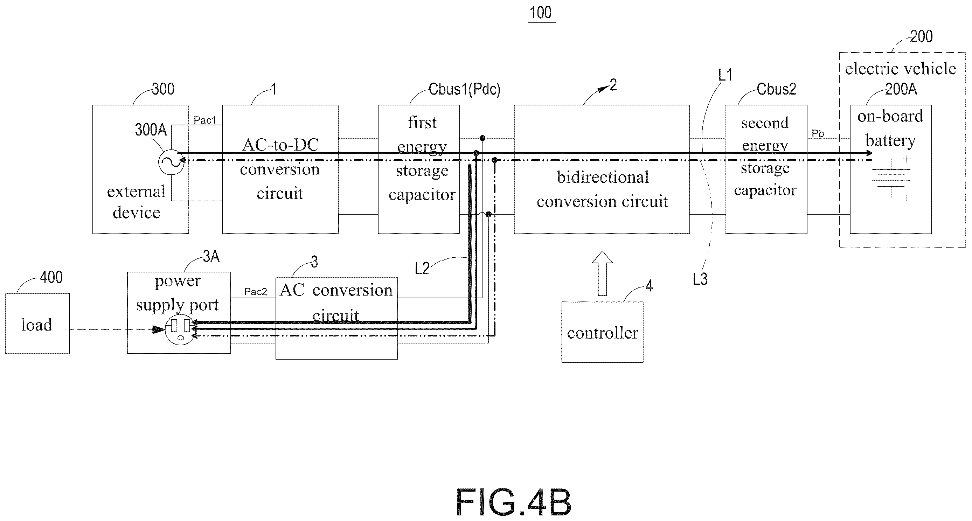

Please refer to FIG. 4A, which shows a circuit block diagram of the on-board charger according to a first embodiment of the present disclosure, please refer to FIG. 4B, which shows a schematic diagram of a power path of the on-board charger according to the first embodiment of the present disclosure, and also refer to FIG. 2 and FIG. 3. In FIG. 4A, the AC conversion circuit 3 is coupled to the AC-to-DC conversion circuit 1 and the first energy storage capacitor Cbus1, and the AC conversion circuit 3 may be a DC-to-AC conversion circuit. Therefore, during the hold-up time, the controller 4 can control the DC-to-AC conversion circuit to convert the residual DC power source Pdc of the first energy storage capacitor Cbus1 into the second AC power source Pac2 so as to continuously provide the second AC power source Pac2 to supply power to the load 400. Since the hold-up time of the on-board charger 100 in the first embodiment uses the residual DC power source Pdc of the first energy storage capacitor Cbus1, the length of the hold-up time is related to the capacitance value of the first energy storage capacitor Cbus1. In particular, the capacitance value of the first energy storage capacitor Cbus1 is proportional to the hold-up time. Therefore, the capacitance value of the first energy storage capacitor Cbus1 needs to be designed according to the length of the mode transition period TD so that the hold-up time is at least equal to the mode transition period TD.

Please refer to FIG. 4B, in the charging mode CH, the first AC power source Pac1 is input from the external device 300 through external connection port 300A, and is converted by the AC-to-DC conversion circuit 1 and the bidirectional conversion circuit 2 to provide the energy storage power source Pb to charge the on-board battery 200A. Furthermore, the AC conversion circuit 3 converts the DC power source Pdc on the first energy storage capacitor Cbus1 into the second AC power source Pac2 to supply power to the load 400 (power path L1 is shown by the thin solid arrow in FIG. 4B). During the mode transition period TD, the AC-to-DC conversion circuit 1 and the bidirectional conversion circuit 2 are disabled and do not perform power conversion. Therefore, the AC conversion circuit 3 converts the residual DC power source Pdc on the first energy storage capacitor Cbus1 into the second AC power source Pac2 to continuously supply power to the load 400 (power path L2 is shown by the thick solid arrow in FIG. 4B). In the discharging mode DH, the energy storage power source Pb of the on-board battery 200A is converted into the DC power source Pdc through the bidirectional conversion circuit 2, and then converted into the second AC power source Pac2 through the AC conversion circuit 3 to continuously supply power to the load 400. Furthermore, when the on-board charger 100 includes vehicle-to-grid (V2G) functionality, the AC-to-DC conversion circuit 1 may be a bidirectional conversion circuit to convert the DC power source Pdc into the first AC power source Pac1 to supply power to the external device 300 (power path L3 is shown by the dashed arrow in FIG. 4B).

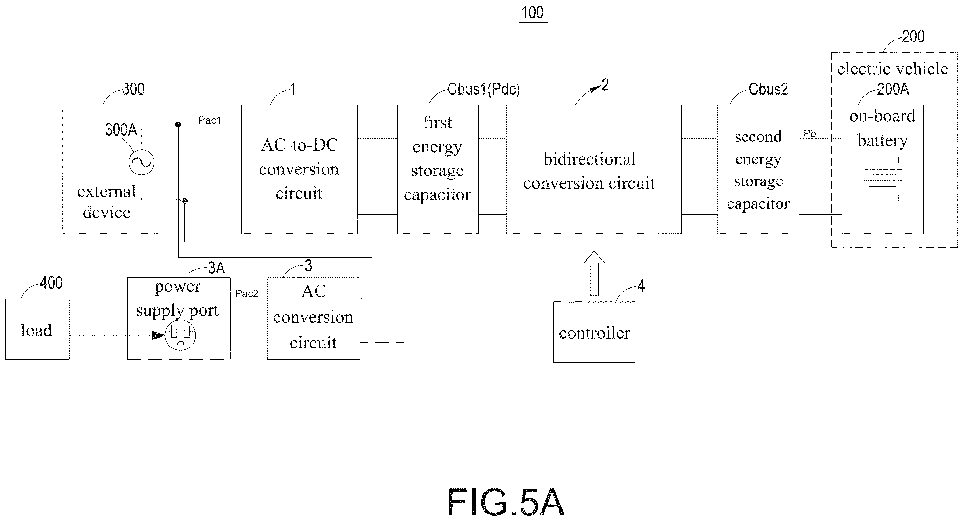

Please refer to FIG. 5A, which shows a circuit block diagram of the on-board charger according to a second embodiment of the present disclosure, and also refer to FIG. 2 to FIG. 4B. In FIG. 5A, the AC conversion circuit 3 is coupled to the external connection port 300A and the AC-to-DC conversion circuit 1, and the AC conversion circuit 3 may be an AC-to-AC conversion circuit. Therefore, during the hold-up time, the controller 4 can control the AC-to-AC conversion circuit to convert the residual power on its internal DC_link capacitor into the second AC power source Pac2 so as to continuously supply power to the load 400 through the second AC power source Pac2. Specifically, the AC-to-AC conversion circuits may be broadly classified into AC-to-DC-to-AC conversion circuits, matrix AC-to-AC conversion circuits, and automatic voltage regulators (AVRs). Since the AC-to-AC conversion circuits need to provide sufficient hold-up time to allow the on-board charger 100 to safely pass through the mode transition period TD, the AC-to-AC conversion circuits are more suitable for circuit structures with a bus (DC-link) (i.e., AC-to-DC-to-AC conversion circuits) and less suitable for circuit structures without a bus (DC-link) (i.e., matrix AC-to-AC conversion circuits).

Since the hold-up time of the on-board charger 100 in the second embodiment utilizes the residual power on the DC_link capacitor on the internal bus (DC-link) of the AC-to-AC conversion circuit, the length of the hold-up time is related to the capacitance value of the DC_link capacitor. In particular, the capacitance value of the DC_link capacitor is directly proportional to the hold-up time. Therefore, the capacitance value of the DC_link capacitor must be designed according to the length of the mode transition period TD so that the hold-up time is at least equal to the mode transition period TD.

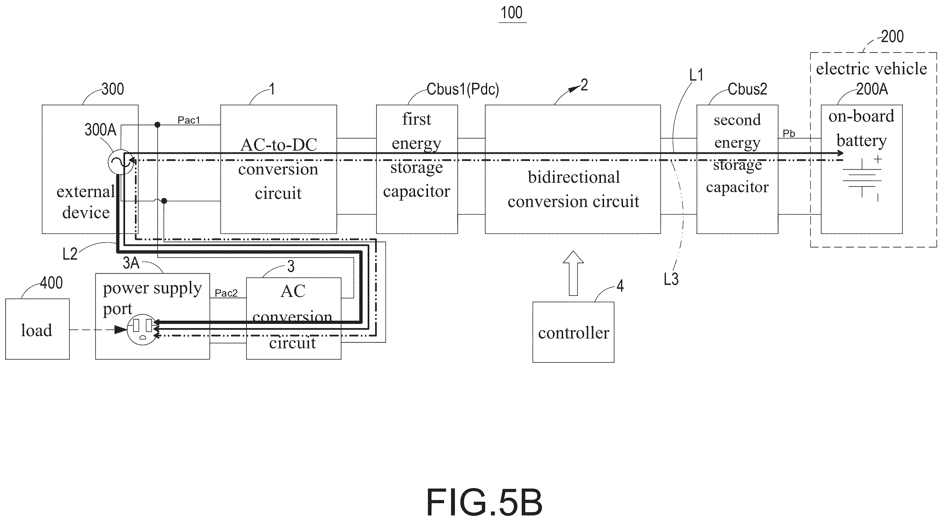

Please refer to FIG. 4B and FIG. 5B, in the charging mode CH, the difference between FIG. 5B and FIG. 4B is that the AC conversion circuit 3 converts the first AC power source Pac1 into the second AC power source Pac2 to supply power to the load 400 (power path L1 is shown by the thin solid arrow in FIG. 5B). Furthermore, during the mode transition period TD, the difference between FIG. 5B and FIG. 4B is that the AC conversion circuit 3 converts the residual power on its internal DC_link capacitor into the second AC power source Pac2 to continuously supply power to the load 400 (power path L2 is shown by the thick solid arrow in FIG. 4B). On the other hand, in the discharging mode DH, the difference between FIG. 5B and FIG. 4B is that the DC power source Pdc is converted into the first AC power source Pac1 through the AC-to-DC conversion circuit, and the AC conversion circuit 3 converts the first AC power source Pac1 into the second AC power source Pac2 to continuously supply power to the load 400 (power path L3 is shown by the dashed arrow in FIG. 4B). In one embodiment, the power paths not described in FIG. 5B are similar to those in FIG. 4B and will not be described further here.

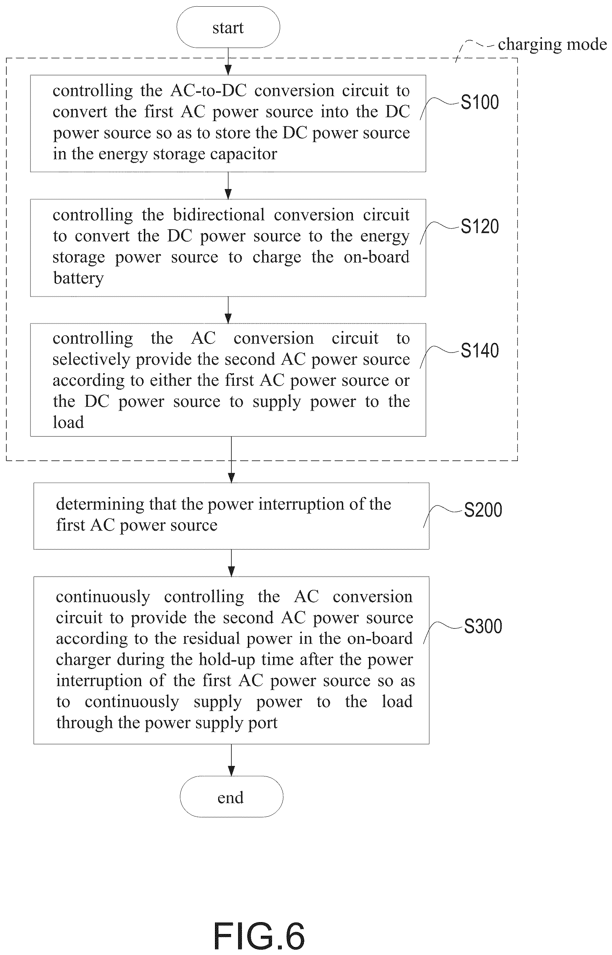

Please refer to FIG. 6, which shows a flowchart of an operating method of the on-board charger according to the present disclosure, and also refer to FIG. 2 to FIG. 5B. The operation method of the on-board charger 100 mainly involves continuously controlling the AC conversion circuit 3 to provide the second AC power source Pac2 according to the residual power inside the on-board charger 100 during the period when the power interruption of the AC power source Pac1 and the controller 4 has not yet controlled the bidirectional conversion circuit 2 to convert the energy storage power source Pb into the DC power source Pdc so as to continuously supply power to the load 400 through the power supply port 3A. Specifically, the operation method of the on-board charger 100 of the present disclosure includes operating in the charging mode CH for charging the on-board battery 200A, and the charging mode CH includes controlling the AC-to-DC conversion circuit to convert the first AC power source into the DC power source so as to store the DC power source in the energy storage capacitor (S100). In a preferred embodiment, the on-board charger 100 can control the AC-to-DC conversion circuit 1 through the controller 4 to convert the first AC power source Pac1 into the DC power source Pdc, and store the DC power source Pdc in the first energy storage capacitor Cbus1.

Afterward, the bidirectional conversion circuit is controlled to convert the DC power source to the energy storage power source to charge the on-board battery (S120). In a preferred embodiment, the on-board charger 100 can control the bidirectional conversion circuit 2 through the controller 4 to bidirectionally convert the DC power source Pdc to the energy storage power source Pb so as to charge or discharge the on-board battery 200A according to the energy storage power source Pb. Therefore, when the external device 300 has power and the on-board battery 200A needs charging, the controller 4 can control the bidirectional conversion circuit 2 to convert the DC power source Pdc into the energy storage power source Pb so as to charge the on-board battery 200A according to the energy storage power source Pb. Afterward, the AC conversion circuit is controlled to selectively provide a second AC power source according to either the first AC power source or the DC power source to supply power to the load (S140). Please refer to FIG. 4A and FIG. 4B, when the AC conversion circuit 3 is coupled to the first energy storage capacitor Cbus1, the on-board charger 100 can control the AC conversion circuit 3 through the controller 4 to convert the DC power source Pdc into the second AC power source Pac2, thereby supplying power to the load through the second AC power source Pac2. Please refer to FIG. 5A and FIG. 5B, when the AC conversion circuit 3 is coupled to the external connection port 300A and the AC-to-DC conversion circuit 1, the on-board charger 100 can control the AC conversion circuit 3 through the controller 4 to convert the first AC power source Pac1 to the second AC power source Pac2, thereby supplying power to the load through the second AC power source Pac2.

Afterward, it is determined that the power interruption of the first AC power source (S200). When the charging mode CH is active and the controller 4 detects and determines that the first AC power source Pac1 has been interrupted, it indicates that the first AC power source Pac1 may be malfunctioning, causing the controller 4 to control its power interruption, or the controller 4 may actively control its power interruption due to user settings. Finally, during the hold-up time after the power interruption of the first AC power source, the AC conversion circuit is continuously controlled to provide the second AC power source according to the residual power in the on-board charger so as to continuously supply power to the load through the power supply port (S300). The on-board charger 100 of the present disclosure can continuously control the AC conversion circuit 3 to provide the second AC power source Pac2 according to the residual power inside the on-board charger 100 during the hold-up time after the power interruption of the first AC power source Pac1 so as to continuously supply power to the load 400 through the power supply port 3A.

In FIG. 4A and FIG. 4B, during the hold-up time, the controller 4 controls the DC-to-AC conversion circuit (i.e., the AC conversion circuit 3) to convert the residual DC power source Pdc on the first energy storage capacitor Cbus1 into the second AC power source Pac2, thereby continuously supplying power to the load 400 through the second AC power source Pac2. In FIG. 5A and FIG. 5B, during the hold-up time, the controller controls the AC-to-AC conversion circuit (i.e., the AC conversion circuit 3) to convert the residual power on its internal DC_link capacitor into the second AC power source Pac2, thereby continuously supplying power to the load 400 through the second AC power source Pac2. In one embodiment, the detailed operation not shown in FIG. 6 may be referred to FIG. 2 to FIG. 5B, and will not be repeated further here.

Furthermore, as explained above, the changes to the circuit structure of the on-board charger 100 effectively solve the problem of voltage drop caused by a sudden disconnection of the external power source. Specifically, by observing the flow of energy during charging and discharging in FIG. 4B and FIG. 5B and comparing it with the structure in FIG. 1, it can be found that in the structure of FIG. 1, the power supply port 3A generally relies on the external device 300 for power. When the first AC power source Pac1 is suddenly interrupted (e.g., charging stops or the power grid is interrupted), the on-board charger 100 will instantly lose its power supply, resulting in a voltage drop at the power supply port 3A.

Conversely, according to the disclosed design, even if the first AC power source Pac1 is disconnected, the first energy storage capacitor Cbus1 or the DC_link capacitor still has a residual portion that can temporarily supply power to the power supply port 3A. This is achieved through the conversion between the AC-to-DC conversion circuit 1 and the AC conversion circuit 3, providing suitable power to the power supply port 3A temporarily as a temporary energy source for the on-board charger 100, buffering voltage changes during mode transitions. Subsequently, while the first energy storage capacitor Cbus1 or the DC_link capacitor consumes its residual power to temporarily supply power to the power supply port 3A, the controller 4 can determine, through handshake communication or automatic sensing by the on-board charger 100, that the operating mode needs to be adjusted to the discharging mode DH. After adjustment, the on-board battery 200A begins supplying the energy storage power source Pb to the bidirectional conversion circuit 2 to continuously replenish the power consumed by the first energy storage capacitor Cbus1 and the DC_link capacitor during the temporary power supply state. Therefore, the on-board battery 200A can quickly take over power supply, ensuring a continuous and stable power output and avoiding the sudden interruption of the second AC power source Pac2 so that the on-board charger 100 can discharge to the power supply port 3A without interruption.

Furthermore, in the structure shown in FIG. 1, if the voltage of the first AC power source Pac1 is not equal to the voltage required by the load 400 (for example, the North American Level 2 charging voltage is AC 240V, while general household appliances can only operate at AC 120V), it is incompatible with powering the load 400 at the power supply port 3A. Therefore, the present disclosure includes an additional AC conversion circuit 3 to meet the power requirements of the load 400. Although the AC conversion circuit 3 involves more components, increasing system complexity and manufacturing costs, it still solves the problem of incompatible voltage of the first AC power source Pac1 compared to the conventional structure of FIG. 1.

On the other hand, compared to FIG. 5A, the structure of FIG. 4A places the AC conversion circuit 3 after the AC-to-DC conversion circuit 1. This design allows for voltage conversion through the AC-to-DC conversion circuit 1 (or power factor correction using a power factor correction circuit), followed by a simple DC-to-AC conversion circuit (i.e., the AC conversion circuit 3, which may be, for example, but not limited to, a full-bridge circuit) to convert the DC power source Pdc into the second AC power source Pac2, which can then directly supply power to the load 400. This structure not only eliminates the need for the more complex AC-to-AC conversion circuit with its complex circuit structure and control methods, but also effectively reduces the number of components. Furthermore, the AC-to-DC conversion circuit 1 can even function without a bidirectional conversion circuit structure, thereby reducing production costs and simplifying system design. In addition, the structure of the present disclosure offers greater flexibility, enabling simultaneous charging of the on-board battery 200A and providing a stable power output to the external load 400, achieving synchronous charging and power supply functions.

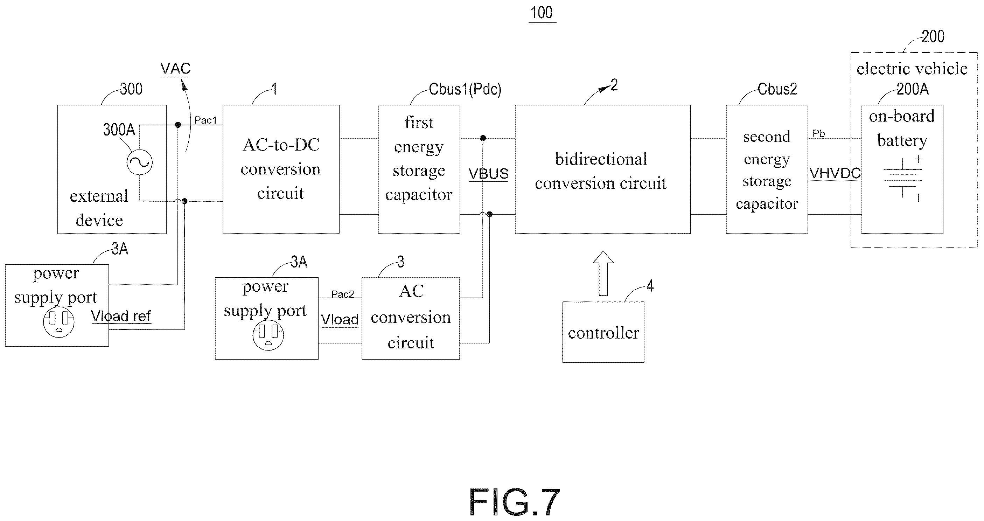

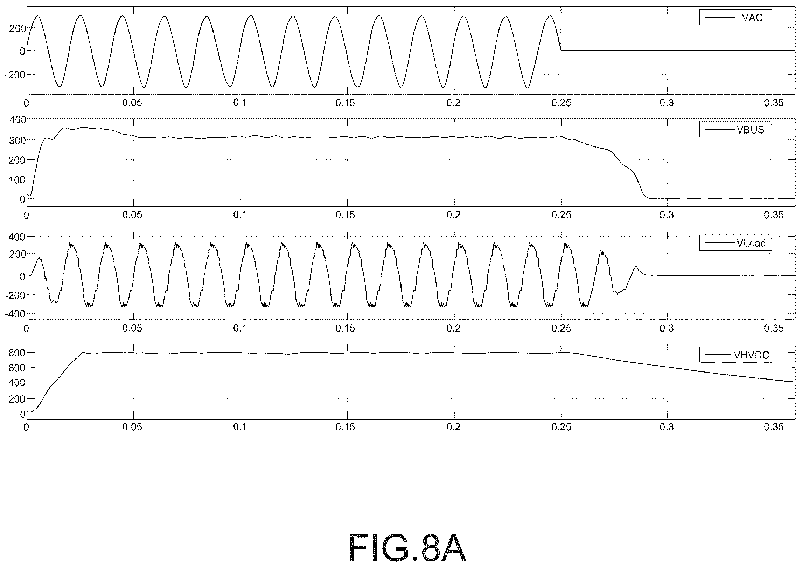

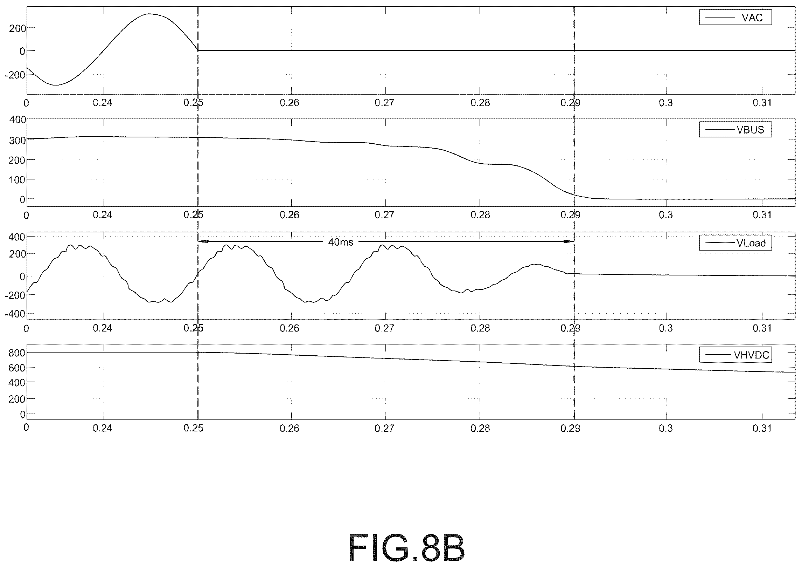

Please refer to FIG. 7, which shows a circuit structure diagram of the on-board charger simulated using simulation software according to the first embodiment of the present disclosure, please refer to FIG. 8A, which shows a schematic waveform diagram illustrating a hold-up time of the on-board charger after a power interruption of a first AC power source according to a first embodiment of the present disclosure, please refer to FIG. 8B, which shows an enlarged schematic waveform diagram illustrating the hold-up time of the on-board charger after the power interruption of the first AC power source according to the first embodiment of the present disclosure, and also refer to FIG. 2 to FIG. 6. The present disclosure can use simulation software such as, but not limited to, Simulink to simulate the waveforms at various points during the normal charging process of the on-board charger 100. In particular, VAC simulates the AC voltage in the first AC power source Pac1, VBUS represents the capacitor voltage of the first energy storage capacitor Cbus1, and VLoad is the voltage supplied to the load 400 after conversion by the AC conversion circuit 3 (i.e., the voltage of power supply port 3A). Furthermore, VLoad_ref represents the voltage of the power supply port 3A in FIG. 1, and VHVDC is the high-voltage DC voltage processed by the bidirectional conversion circuit 2. This high-voltage DC voltage will be further converted and input to the on-board battery 200A for charging.

FIG. 8A simulates a scenario where the first AC power source Pac1 is suddenly interrupted when the external connection port 300A is coupled to the on-board charger 100 for charging. Specifically, the external connection port 300A disconnects at 0.25 seconds, and its impact on the on-board charger 100 can be observed. FIG. 8B is mainly an enlarged waveform of FIG. 8A at 0.25 seconds, and it clearly shows that the voltage VLoad supplied to the load 400 after conversion by the AC conversion circuit 3 does not drop abruptly, but rather exhibits a gradually decreasing trend. Furthermore, it only drops to 0V after approximately two cycles (approximately 40 milliseconds). In addition, the hold-up time of the voltage VLoad is proportional to the capacitance value of the first energy storage capacitor Cbus1. The simulation in FIG. 8A uses a 1250µF capacitor for testing. This indicates that appropriately increasing the capacitance value of the first energy storage capacitor Cbus1 according to the hold-up time specification can further extend the hold-up time of the voltage VLoad and reduce the impact of voltage surge on the stability of the on-board charger 100.

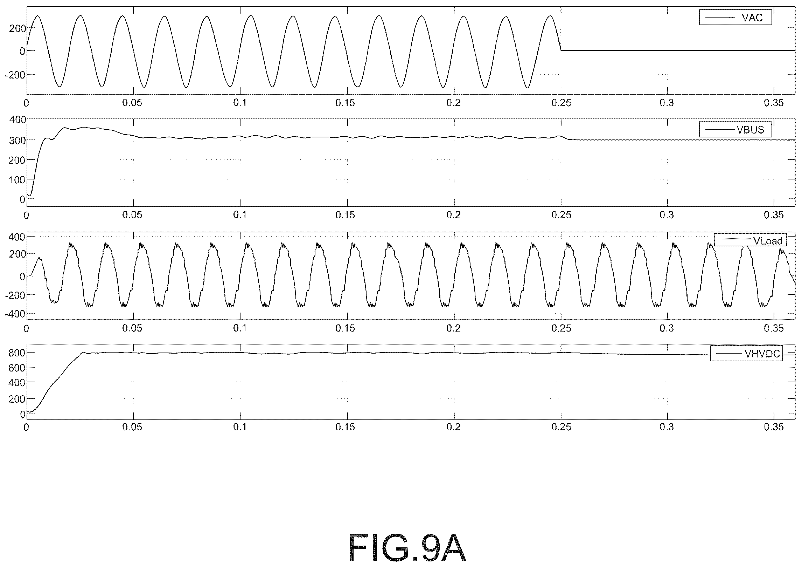

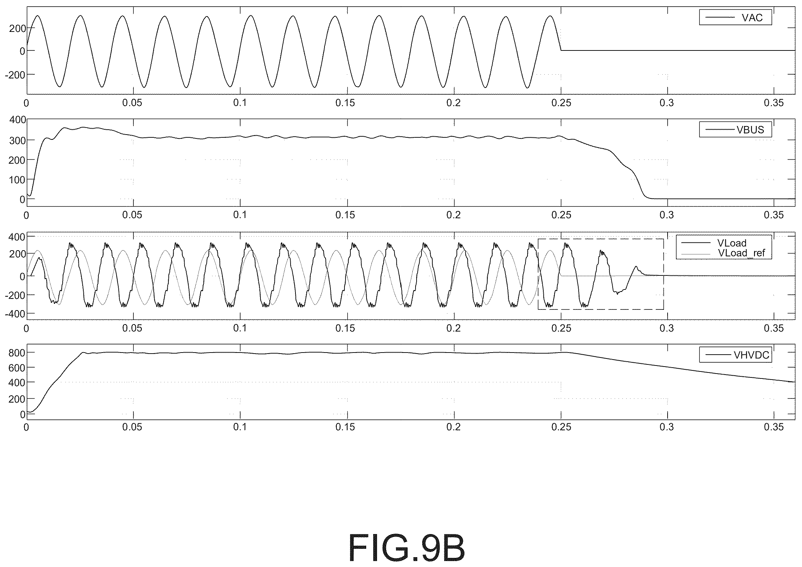

Please refer to FIG. 9A, which shows a schematic waveform diagram illustrating the on-board charger transitioning from the mode transition period to a discharging mode according to the first embodiment of the present disclosure, please refer to FIG. 9B, which shows a comparative waveform diagram illustrating a comparison between the on-board charger shown in FIG. 1 and FIG. 4A when the first AC power source is abruptly interrupted according to the present disclosure, and also refer to FIG. 2 to FIG. 8. FIG. 9A simulates the situation where, during normal charging through external connection port 300A coupled to the on-board charger 100, the first AC power source Pac1 is suddenly interrupted. Initially, the system enters the mode transition period TD, and then the on-board battery 200A takes over power, transitioning to the discharging mode DH. At 0.25 seconds, the external connection port 300A is disconnected, entering the mode transition period TD. During this time, the voltage VBUS of the first energy storage capacitor Cbus1 gradually decreases, and the AC conversion circuit 3 continuously supplies power to the load 400 by converting the residual DC power source Pdc of the first energy storage capacitor Cbus1. During the mode transition period TD, when the controller 4 confirms that the operating mode has been adjusted to the discharging mode DH through detection or handshake communication, the controller 4 adjusts to the discharging mode DH to enable the on-board battery 200A to start discharging automatically to provide the power required for the operation of the load 400, thereby ensuring the voltage VLoad of the power supply port 3A to be stable, and avoiding the occurrence of instantaneous power failure.

FIG. 9B compares the effects of the circuit structure shown in FIG. 1 and FIG. 4A on the voltage VLoad and the voltage VLoad_ref of the power supply port 3A when the sudden power interruption of the external connection port 300A. It can be observed that when the power interruption of the external connection port 300A occurs at 0.25 seconds, the voltage VLoad_ref of the power supply port 3A in FIG. 1 drops sharply, thereby causing an interruption in the power supply to the power supply port 3A. Conversely, the voltage VLoad of the power supply port 3A in FIG. 4A is maintained for approximately two cycles (approximately 40 milliseconds) before gradually dropping to 0V (as shown in the dashed box). This demonstrates that the structure of the present disclosure can effectively mitigate the voltage drop problem, increase the stability and reliability of the system, and enable the power supply port 3A to maintain a short power supply time when the external connection port 300A is disconnected so as to reduce the impact of voltage fluctuations on device operation.

In summary, the present disclosure, through simulation analysis to demonstrate its technical feasibility, can be summarized to achieve at least the following advantages:
1. The present disclosure utilizes the first energy storage capacitor Cbus1 between the AC-to-DC conversion circuit 1 and the bidirectional conversion circuit 2 as the voltage source for the AC conversion circuit 3. This allows the first energy storage capacitor Cbus1 to provide short-term power to buffer voltage fluctuations and ensure seamless power supply from the on-board battery 200A. Similarly, the present disclosure utilizes the DC_link capacitor inside the AC conversion circuit 3 to provide short-term power to buffer voltage fluctuations and ensure seamless power supply from the on-board battery 200A.
2. Synchronous charging and power supply: The on-board charger 100 is designed to allow the on-board battery 200A to stably supply power to the load 400 while it is charging.
3. Reduce additional conversion devices: Compared with the circuit structure of FIG. 5A, the on-board charger 100 in FIG. 4A utilizes the DC power source Pdc on the first energy storage capacitor Cbus1, which only needs to be converted into the second AC power source Pac2 through a simple DC-to-AC conversion circuit. This eliminates the need for a more complex AC-to-AC conversion circuit with a simpler circuit structure and control method, thereby reducing the number of components and cost.

As will become apparent to the skilled person when studying the above disclosure in conjunction with the appended claims, the appended claims may also be understood as multiple dependent although these have been drafted as single dependent claims. Hence, e.g., the expression 'The on-board charger as claimed in claim 1' is to be understood also in the sense of 'The on-board charger as claimed in any of the preceding claims' or with reference to any combination of antecedent claims as far as disclosed in the above disclosure. This also applies to the claimed operating method.

## Claims

1. An on-board charger (100) configured in an electric vehicle (200) comprising an on-board battery (200A), the on-board charger (100) comprising:
an AC-to-DC conversion circuit (1) coupled to an external connection port (300A) for transmitting a first AC power source (Pac1), and the AC-to-DC conversion circuit (1) configured to convert the first AC power source (Pac1) into a DC power source (Pdc),
an energy storage capacitor (Cbus1) coupled to the AC-to-DC conversion circuit (1), and configured to store the DC power source (Pdc),
a bidirectional conversion circuit (2) coupled to the AC-to-DC conversion circuit (1) and the on-board battery (200A), and configured to bidirectionally convert the DC power source (Pdc) and an energy storage power source (Pb) to charge or discharge the on-board battery (200A) according to the energy storage power source (Pb),
an AC conversion circuit (3) coupled to the AC-to-DC conversion circuit (1) and a power supply port (3A), and the AC conversion circuit (3) configured to selectively provide a second AC power source (Pac2) according to the first AC power source (Pac1) or the DC power source (Pdc), and
a controller (4) coupled to the AC conversion circuit (3), and configured to continuously control the AC conversion circuit (3) to provide the second AC power source (Pac2) according to residual power of the on-board charger (100) for a hold-up time after a power interruption of the first AC power source (Pac1) so as to continuously supply power to a load (400) through the power supply port (3A).

2. The on-board charger (100) as claimed in claim 1, wherein the controller (4) is configured to operate in a charging mode (CH) for charging the on-board battery (200A) and a discharging mode (DH) for discharging the on-board battery (200A), and during a mode transition period (TD) between the charging mode (CH) and the discharging mode (DH), the controller (4) is configured to disable the AC-to-DC conversion circuit (1) and the bidirectional conversion circuit (2).

3. The on-board charger (100) as claimed in claim 2, wherein the AC-to-DC conversion circuit (1) is a bidirectional conversion circuit (2), and the controller (4) is configured to control the AC-to-DC conversion circuit (1) to convert the DC power source (Pdc) into the first AC power source (Pac1) in the discharging mode (DH).

4. The on-board charger (100) as claimed in claim 2, wherein the hold-up time is greater than or equal to the mode transition period (TD) so as to maintain the second AC power source (Pac2) above a predetermined threshold during the mode transition period (TD); wherein during the mode transition period (TD), the AC conversion circuit (3) is configured to notify the load (400) via the power supply port (3A), to perform a load reduction and to limit an output power provided by the AC conversion circuit (3).

5. The on-board charger (100) as claimed in claim 1, wherein the AC-to-DC conversion circuit (1) is a unidirectional conversion circuit, and the controller (4) is configured to continuously disable the AC-to-DC conversion circuit (1) after the power interruption of the first AC power source (Pac1).

6. The on-board charger (100) as claimed in claim 1, wherein the AC-to-DC conversion circuit (1) is a power factor correction circuit, and the power factor correction circuit is configured to correct a power factor of the first AC power source (Pac1).

7. The on-board charger (100) as claimed in claim 1, wherein the AC conversion circuit (3) is coupled to the energy storage capacitor (Cbus1), and the AC conversion circuit (3) is a DC-to-AC conversion circuit; the controller (4) is configured to control the DC-to-AC conversion circuit to convert the residual power of the energy storage capacitor (Cbus1) into the second AC power source (Pac2) during the hold-up time to continuously supply power to the load (400); wherein a capacitance value of the energy storage capacitor (Cbus1) is proportional to the hold-up time.

8. The on-board charger (100) as claimed in claim 1, wherein the AC conversion circuit (3) is coupled to the external connection port (300A) and the AC-to-DC conversion circuit (1), and the AC conversion circuit (3) is an AC-to-AC conversion circuit; the controller (4) is configured to control the AC-to-AC conversion circuit to convert the residual power on its internal DC-link capacitor into the second AC power source (Pac2) during the hold-up time to continuously supply power to the load (400); wherein a capacitance value of the DC_link capacitor is proportional to the hold-up time.

9. An operating method of an on-board charger (100), the on-board charger (100) configured in an electric vehicle (200) comprising an on-board battery (200A), the on-board charger (100) comprising an AC-to-DC conversion circuit (1), an energy storage capacitor (Cbus1), a bidirectional conversion circuit (2), and an AC conversion circuit (3), the AC-to-DC conversion circuit (1) coupled to an external connection port (300A) for transmitting a first AC power source (Pac1), and the AC-to-DC conversion circuit (1) coupled to a power supply port (3A) for connecting a load (400), the method comprising steps of:
(a) operating in a charging mode (CH) for charging the on-board battery (200A), the charging mode (CH) comprising steps of:
(a1) controlling the AC-to-DC conversion circuit (1) to convert the first AC power source (Pac1) into a DC power source (Pdc) and storing the DC power source (Pdc) in the energy storage capacitor (Cbus1),
(a2) controlling the bidirectional conversion circuit (2) to convert the DC power source (Pdc) into an energy storage power source (Pb) and providing the energy storage power source (Pb) to charge the on-board battery (200A), and
(a3) controlling the AC conversion circuit (3) to selectively provide a second AC power source (Pac2) according to either the first AC power source (Pac1) or the DC power source (Pdc) to supply power to the load (400),
(b) detecting that the first AC power source (Pac1) has been interrupted, and
(c) continuously controlling the AC conversion circuit (3) to provide the second AC power source (Pac2) according to residual power of the on-board charger (100) for a hold-up time after the power interruption of the first AC power source (Pac1) so as to continuously supply power to the load (400) through the power supply port (3A).

10. The operating method as claimed in claim 9, wherein the AC conversion circuit (3) is a DC-to-AC conversion circuit, and step (c) further comprises a step of:
(c1) disabling the AC-to-DC conversion circuit (1) and the bidirectional conversion circuit (2) during a mode transition period (TD) in which the charging mode (CH) is switched to a discharging mode (DH), wherein in the discharging mode (DH), the on-board battery (200A) discharges,
wherein the hold-up time is greater than or equal to the mode transition period (TD) to maintain the second AC power source (Pac2) above a predetermined threshold during the mode transition period (TD); wherein step (c) further comprises a step of:
controlling the DC-to-AC conversion circuit to convert residual power of the energy storage capacitor (Cbus1) into the second AC power source (Pac2) during the mode transition period (TD) to continuously provide the second AC power source (Pac2) to supply power to the load (400).

11. The operating method as claimed in claim 10, further comprising a step of:
(d) operating in the discharging mode (DH), the discharging mode (DH) comprising steps of:
(d1) enabling the bidirectional conversion circuit and controlling the bidirectional conversion circuit to convert the energy storage power source (Pb) into the DC power source (Pdc), and
(d2) controlling the AC conversion circuit (3) to convert the DC power source (Pdc) into the second AC power source (Pac2).

12. The operating method as claimed in claim 11, wherein step (d) further comprises a step of:
(d3) enabling the AC-to-DC conversion circuit (1) and controlling the AC-to-DC conversion circuit (1) to convert the DC power source (Pdc) into the first AC power source (Pac1) to supply power to the external connection port (300A).

13. The operating method as claimed in claim 11, wherein step (d) further comprises a step of:
(d4) continuously disabling the AC-to-DC conversion circuit (1) until the charging mode (CH) is switched to.

14. The operating method as claimed in claim 10, wherein the AC conversion circuit (3) is an AC-to-AC conversion circuit, and step (c1) further comprises a step of:
controlling the AC-to-AC conversion circuit to convert residual power on a DC_link capacitor inside itself into the second AC power source (Pac2) during the hold-up time so as to continuously provide the second AC power source (Pac2) to supply power to the load (400).

15. The operating method as claimed in claim 14, further comprising steps of:
(d) operating in the discharging mode (DH), and the discharging mode (DH) comprising steps of:
(d1) enabling the bidirectional conversion circuit (2) and controlling the bidirectional conversion circuit (2) to convert the energy storage power source (Pb) into the DC power source (Pde),
(d2) enabling the AC-to-DC conversion circuit (1) and controlling the AC-to-DC conversion circuit (1) to convert the DC power source (Pdc) into the first AC power source (Pac1), and
(d3) controlling the AC-to-DC conversion circuit (1) to convert the first AC power source (Pac1) into the second AC power source (Pac2).
